# EUROPÄISCHE PATENTSCHRIFT

(11) **EP 2 508 753 B1**
(45) Veröffentlichungstag und Bekanntmachung des Hinweises auf die Patenterteilung: **27.05.2015**
(21) Anmeldenummer: 11161449.1
(22) Anmeldetag: 07.04.2011
(51) Int. Cl.: F03D 11/02

(54) **Kompakte Getriebe-Generator-Einheit für Windenergieanlagen**
Compact drive-generator unit for wind turbines
Unité de générateur et système d'entraînement compacte pour éoliennes

(43) Veröffentlichungstag der Anmeldung: 10.10.2012
(73) Patentinhaber: Siemens Aktiengesellschaft, 80333 München (DE)
(72) Erfinder: Böing, Alfons, 46395 Bocholt (DE); Dinter, Ralf Martin, 45888 Gelsenkirchen (DE); Draber, Jürgen, 94036 Passau (DE); Grüning, Arne, 94032 Passau (DE); Memminger, Oliver, 94127 Neuburg A.D. Inn (DE); Möhle, Axel, 12163 Berlin (DE); Schöberl, Friedrich, 94099 Ruhstorf a.d. Rott (DE); Zeichfüßl, Roland, 94575 Rathsmannsdorf (DE)

(56) Entgegenhaltungen:
- EP-A2- 2 216 547
- WO-A1-2007/107158
- WO-A2-2009/049599
- DE-A1-102007 012 408
- DE-U1- 29 714 740

## Beschreibung

Die vorliegende Erfindung betrifft einen Triebstrang für eine Windenergieanlage mit einem Getriebe, das ein Getriebegehäuse aufweist und über eine langsam laufende Antriebswelle mit einem Windrotor verbunden oder verbindbar ist, und einem Generator, der ein mit dem Getriebegehäuse fest verbundenes Generatorgehäuse aufweist, in dem wenigstens ein Stator und wenigstens ein Rotor vorgesehen sind, wobei der Rotor mit einer an dem Getriebegehäuse gelagerten schnell laufenden Abtriebswelle des Getriebes gekoppelt ist.

Triebstränge für Windenergieanlagen sind bekannt und werden eingesetzt, um die Rotationsenergie des durch den Wind in Bewegung gesetzten Windrotors über einen mit dem Windrotor gekoppelten Generator in elektrische Energie umzuwandeln. Dabei erreicht der Windrotor typischerweise Drehzahlen im Bereich von etwa 10 bis 20 min⁻¹.

Ein großer Teil der bestehenden Windenergieanlagen ist mit schnell laufenden Generatoren mit einer Drehzahl von 1000 bis 2000 min⁻¹ ausgestattet. Zur Übersetzung der relativ langsamen Drehzahl des Windrotors auf die Generatordrehzahl wird ein mehrstufiges Getriebe zwischengeschaltet, das in Kombination mit dem Generator allgemein als Triebstrang bezeichnet wird. Die beiden Triebstangkomponenten werden im Wesentlichen unabhängig voneinander ausgelegt und über konventionelle Kupplungen miteinander verbunden.

Nachteilig hierbei ist, dass der Triebstrang einen vergleichsweise hohen Platzbedarf benötigt und aufgrund der Vielzahl an Bauteilen eine komplexe Bauform aufweist.

Neben der klassischen Getriebelösung werden auch Generatoren eingesetzt, die getriebelos mit dem Windrotor gekoppelt sind.

Bei dieser Bauform wird der Generator direkt durch den Windrotor angetrieben.

Nachteilig hierbei ist, dass aufgrund des hohen Drehmomentes, welches direkt aus dem Windrotor in den Generator eingeleitet wird, der Generator und insbesondere der Rotor des Generators einen vergleichsweise großen Durchmesser aufweist. Dies geht einher mit einer vergleichsweise großen Bauform und einem hohen Gewicht des Triebstrangs.

Ein drittes Konzept sieht vor, den Generator und das Getriebe fest zu einer Triebstrangkomponente miteinander zu verbinden, um eine kompakte Getriebe-Generator-Einheit für Windenergieanlagen zu erhalten. Ein solcher Triebstrang ist beispielsweise in der EP 2 216 547 A2 beschrieben. Der aus dieser Druckschrift bekannte Triebstrang für eine Windenergieanlage weist ein Getriebe mit einem Getriebegehäuse auf, das über eine langsam laufende Antriebswelle mit einem Windrotor verbunden ist. Weiterhin ist ein Generator vorgesehen, der ein fest mit dem Getriebegehäuse verbundenes Generatorgehäuse aufweist. Ein Rotor des Generators wird über eine Sonnenradwelle des Getriebes angetrieben. Durch den sich gegenüber einem feststehenden Stator drehenden Rotor wird in an sich bekannter Weise die Rotationsenergie des Windrotors in elektrische Energie umgewandelt.

Ein weiterer Triebstrang der eingangs genannten Art ist aus der WO 2010/027618 A2 vorbekannt. Dieser Triebstrang weist ebenfalls ein Getriebe mit einem Getriebegehäuse auf, das über eine langsam laufende Antriebswelle mit einem Windrotor verbunden ist. Weiterhin ist ein Generator vorgesehen, der ein mit dem Getriebegehäuse fest verbundenes Generatorgehäuse aufweist, wobei im Übergangsbereich zwischen beiden Gehäusen ein Verbindungsrahmen vorgesehen ist.

Ein weiterer Triebstrang ist in der Druckschrift WO 2007/107158 A1 offenbart.

An diesen Ausgestaltungen wird zum Teil als nachteilig empfunden, dass zwischen dem Sonnenrad und dem Rotor ein vergleichsweise großer Hebelarm herrscht, der den Kraftfluss zwischen dem Getriebe und dem Generator negativ beeinflusst.

Aufgabe der vorliegenden Erfindung ist es daher, einen kompakten Triebstrang für Windenergieanlagen bereitzustellen, der einen effizienten Kraftfluss zwischen dem Getriebe und dem Generatorgehäuse erlaubt.

Diese Aufgabe wird erfindungsgemäß durch einen Triebstrang nach Anspruch 1 gelöst.

Der Erfindung liegt somit die Überlegung zugrunde, den Kraftschluss zwischen dem Getriebe und dem Generator durch möglichst kurz ausgebildete Wellen zu optimieren.

Hierzu schlägt die Erfindung vor, in dem Generatorgehäuse eine zu der Abtriebswelle des Getriebes koaxial angeordnete Generatorwelle anzuordnen, die an dem Generatorgehäuse gelagert ist. Über Verbindungsflansche, die an den zueinander weisenden Enden der beiden Wellen angeordnet sind, sind die Generatorwelle und die Abtriebswelle des Getriebes drehfest miteinander verbunden. Die Flanschverbindung ermöglicht, auf eine zweite Lagerung der Generatorwelle zu verzichten, da sich die Generatorwelle über die Flanschverbindung an der Abtriebswelle abstützt. Darüber hinaus ermöglicht diese Ausgestaltungsform den Einsatz einer besonders kurz ausgebildeten Abtriebs- und Generatorwelle, wodurch der Einfluss von auf die Wellen einwirkenden Torsionskräften minimiert wird. Dadurch können die beiden Wellen insgesamt leichter ausgelegt werden. Des Weiteren schlägt die Erfindung vor, das Getriebe gegenüber dem Generator elektrisch zu isolieren, indem zwischen den beiden Verbindungsflanschen eine elektrische Isolierung vorgesehen ist.

In bevorzugter Weise kann der Verbindungsflansch der Abtriebswelle formschlüssig, insbesondere mittels Welle/Nabeverbindung, auf der Abtriebswelle sitzen. Diese Form der drehfesten Verbindung ist besonders einfach herzustellen.

In weiterer Ausgestaltung der Erfindung ist vorgesehen, dass die Antriebswelle und/oder die Abtriebswelle und/oder die Generatorwelle als Hohlwellen ausgebildet sind. Dies ermöglicht, dass weitere Bauteile, insbesondere eine Anlage zur Pitchsteuerung der Rotorblätter in den Hohlwellen untergebracht werden kann.

Bei einer Weiterbildung des erfindungsgemäßen Triebstrangs weist der Stator einen Statorkühlkreislauf auf. Die im Betrieb des Generators entstehende Wärme im Bereich des Stators kann auf diese Weise abgeleitet werden. Dies ermöglicht, dass der Stator stets in seinem optimalen Betriebstemperaturbereich betrieben werden kann.

Um einen möglichst effizient arbeitenden Statorkühlkreislauf bereitzustellen, kann sich der Statorkühlkreislauf entlang der Umfangsrichtung des Stators erstrecken, und insbesondere an dessen Außenbereich ausgebildet sein. In bevorzugter Weise ist der Statorkühlkreislauf aus mehreren ringförmigen Kühlmittelkanälen gebildet.

Gemäß einer weiteren Ausgestaltung der vorliegenden Erfindung weist der Rotor einen Rotorkühlkreislauf auf. Dieser ist in bevorzugter Weise mit der von dem Stator wegweisenden Außenfläche des Statorkühlkreislaufs thermisch derart gekoppelt, dass ein Wärmeaustausch zwischen beiden Kühlkreisläufen stattfindet. Dies ermöglicht, die im Betrieb des Generators entstehende Wärme im Bereich des Rotors über den Rotorkühlkreislauf abzuleiten. Darüber hinaus ermöglicht die thermische Kopplung einen Wärmeaustausch zwischen beiden Kühlkreisläufen, so dass eine Rückkühlung des Rotorkühlkreislaufs durch den Statorkühlkreislauf gewährleistet wird.

Um den Rotorkühlkreislauf anzutreiben, kann ein Wellenlüfter vorgesehen sein, der auf der Generatorwelle sitzt. Somit kann die vorhandene Rotationsenergie der Generatorwelle auf einfache Art und Weise eingesetzt werden, um den Rotorkühlkreislauf anzutreiben.

Des Weiteren kann das Getriebe einen Getriebekühlkreislauf aufweisen. In bevorzugter Weise ist der Getriebekühlkreislauf mit dem Stator- oder Rotorkühlkreislauf flüssigkeitsleitend verbunden. Dadurch ist eine Kühlung des Getriebes möglich, die insbesondere mit einem der beiden Kühlkreisläufe des Generators gekoppelt ist, um den Energiebedarf des Triebstrangs zu optimieren.

In zweckmäßiger Weise kann als Kühlmedium des Stator- und/oder des Rotor- und/oder des Getriebekühlkreislaufes jeweils ein wasserhaltiges Kühlmittel vorgesehen sein. Ein wasserhaltiges Kühlmittel insbesondere mit einem Frostschutzmittel ist besonders geeignet.

In bevorzugter Weise ist zumindest ein Teil des Getriebegehäuses mit einem Schmiermedium, insbesondere einem ölhaltigen Schmiermedium gefüllt. Dies gewährleistet eine ausreichende Schmierung des Getriebes.

Weiterhin kann die elektrische Isolierung zwischen den beiden Verbindungsflanschen öl- und fettabweisend ausgebildet sein.

Dadurch wird zum einen die Beständigkeit der Isolierung erhöht und zum anderen die Flanschverbindung gegenüber Flüssigkeiten und Fetten abgedichtet.

Gemäß einer Weiterbildung des erfindungsgemäßen Triebstrangs ist vorgesehen, dass an der von dem Getriebe wegweisenden Seitenwand des Generatorgehäuses eine Bremsanlage für die Generatorwelle vorgesehen ist, und dass insbesondere die Generatorwelle eine mit der Bremsanlage zusammenwirkende Bremsscheibe trägt. Dies ermöglicht, dass durch insbesondere eine automatische Betätigung der Bremsanlage die Windrotordrehzahl beispielsweise bei Windböen innerhalb des gewünschten Drehzahltoleranzbereichs gehalten werden kann. Darüber hinaus ist es möglich, den Windrotor für Wartungsarbeiten festzustellen.

Weiterhin kann vorgesehen sein, dass der Generator als permanentmagneterregter Generator ausgebildet ist. Dadurch entfällt die Erregerleistung und der Wirkungsgrad des Generators wird erhöht. Mit der großen Leistungsdichte verringert sich zudem die Masse des Generators bei gegebener Leistung, so dass insgesamt eine kompaktere Bauweise erreicht wird.

In zweckmäßiger Weise kann der Generator als Innenläufer ausgebildet sein. Diese Ausgestaltung ist bei leistungsstarken Windenergieanlagen besonders effizient und einfach herzustellen. In gleicher Weise kann der Generator auch als Außenläufer ausgebildet sein.

Schließlich kann der Generator mit einer Drehzahl von etwa 450 min⁻¹ bis 650 min⁻¹ rotieren. Durch die verhältnismäßig niedrige Drehzahl des Generators kann im Vergleich zu der vorgenannten klassischen Getriebelösung, bei der Generatordrehzahlen von etwa 1000 min⁻¹ bis 2000 min⁻¹ erreicht werden, auf eine Getriebestufe verzichtet werden. Hinsichtlich weiterer vorteilhafter Ausgestaltungen der Erfindung wird auf die Unteransprüche sowie die nachfolgende Beschreibung von einem Ausführungsbeispiel unter Bezugnahme auf die beiliegende Zeichnung verwiesen. In der Zeichnung zeigt:

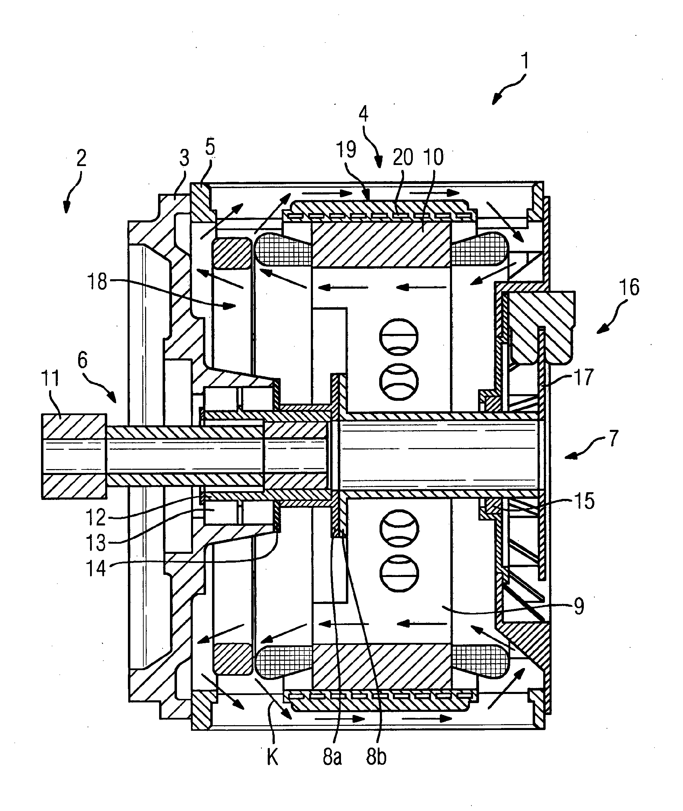

- Figur 1: einen Ausschnitt eines Triebstrangs gemäß einer Ausführungsform der vorliegenden Erfindung in einer Querschnittsansicht.

In der Figur 1 ist ein Ausschnitt eines Triebstrangs 1 gemäß einer Ausführungsform der vorliegenden Erfindung dargestellt. Ein solcher Triebstrang 1 ist ein Bestandteil einer Windenergieanlage und wandelt Rotationsenergie eines nicht dargestellten Windrotors in elektrische Energie um. Der Triebstrang 1 besteht aus einem Getriebe 2 mit einem Getriebegehäuse 3 und einem permanentmagneterregten Generator 4, der ein mit dem Getriebegehäuse 3 fest verbundenes Generatorgehäuse 5 aufweist. Eingangsseitig ist das Getriebe 2 über eine nicht dargestellte langsam laufende Antriebswelle mit dem Windrotor verbunden und wandelt in an sich bekannter Weise die niedrige Drehzahl und das hohe Drehmoment der Antriebswelle in eine hohe Drehzahl und ein niedriges Drehmoment um. Ausgangsseitig weist das Getriebe 4 eine schnell laufende Abtriebswelle 6 auf, die mit einer Generatorwelle 7 des Generators 4 drehfest verbunden ist. An den zueinander weisenden Enden der beiden Wellen 6, 7 sind Verbindungsflansche 8a, 8b angeordnet, die zwischen sich eine nicht dargestellte elektrische Isolierung aufweisen, die zusätzlich ölabweisend ausgebildet ist. Mit der Generatorwelle 7 ist ein Rotor 9 verbunden, der gegenüber einem feststehenden Stator 10 drehbar gehalten ist, um in an sich bekannter Weise die Rotationsenergie der Generatorwelle 7 in elektrische Energie umzuwandeln.

Das teilweise mit einem ölhaltigen Schmiermittel gefüllte Getriebegehäuse 3 umschließt zumindest eine Planetengetriebestufe mit einem Sonnenrad 11, über das die Abtriebswelle 6 antreibbar ist. Die Abtriebswelle 6 ist als Hohlwelle ausgebildet und trägt an ihrem zu der Generatorwelle 7 weisenden Endbereich eine Nabe 12, die durch eine Kurzverzahnung mit der Abtriebswelle 6 drehfest verbunden ist. Über die Nabe 12 ist die Abtriebswelle 6 durch zwei Kegelrollenlager 13 an dem Getriebegehäuse 3 gelagert. An diesem Endbereich ist über Formschluss der Verbindungsflansch 8a mit der Nabe 12 drehfest verbunden.

Zwischen dem Getriebegehäuse 3 und dem fest damit verbundenen Generatorgehäuse 5 ist eine Dichtung 14 vorgesehen, die hier als Labyrinthdichtung ausgebildet ist.

Die Generatorwelle 7 ist koaxial zu der Abtriebswelle 6 des Getriebes 2 angeordnet und ebenfalls als Hohlwelle ausgebildet. An ihrem getriebefernen Ende ist die Generatorwelle 7 über ein Wälzlager 15 an dem Generatorgehäuse 5 gelagert. An diesem Bereich des Generatorgehäuses 5 ist auch eine Bremsanlage 16 für die Generatorwelle 7 angeordnet, die mit einer an dem getriebefernen Ende der Generatorwelle 7 angebrachten Bremsscheibe 17 zusammenwirkt.

Der mit der Generatorwelle 7 verbundene Rotor 9 weist mehrere Speichen auf. Alternativ zu der Ausführungsform des Generators 4 als Innenläufer kann auch ein Außenläufer vorgesehen sein.

Der Generator 4 umfasst zwei voneinander getrennte Kühlkreisläufe 18, 19, die jeweils mit einem wasserhaltigen Kühlmittel gefüllt sind. In der Figur 1 ist gut erkennbar, dass ein mit Pfeilen K gekennzeichneter innerer Kühlkreislauf, der sogenannte Rotorkühlkreislauf 18, den Freiraum zwischen den Speichen des Rotors 9 durchströmt und über einen nicht dargestellten Wellenlüfter, welcher an der Generatorwelle angebracht ist, über den radial äußeren Bereich des Generatorgehäuses 5 zwischen der Außenwand des Generatorgehäuses 5 und dem Stator 10 zurückgeführt wird.

Ein zweiter Kühlkreislauf, der sogenannte Statorkühlkreislauf 19, ist als Wassermantelkühlung entlang der Umfangsrichtung des Stators 10 an dessen Außenbereich ausgebildet. Der Statorkühlkreislauf 19 weist mehrere ringförmige, miteinander flüssigkeitsleitend verbundene Kühlmittelkanäle 20 auf, die über zwei nicht dargestellte Wasseranschlüsse einen geschlossen Kühlkreislauf bilden. In nicht dargestellter Weise kann zusätzlich das Getriebe 2 einen Kühlkreislauf aufweisen, der über die beiden Wasseranschlüsse des Statorkühlkreislaufes 19 mit diesem verbunden ist.

Der Rotorkühlkreislauf 18 ist entlang der Außenfläche des Statorkühlkreislaufes 19 thermisch derart mit diesem gekoppelt, dass ein Wärmeaustausch zwischen beiden Kühlkreisläufen 18, 19 stattfindet.

Zur Wandlung der Rotationsenergie des Windrotors in elektrische Energie wandelt zunächst das Getriebe 2 die niedrige Drehzahl und das hohe Drehmoment der Antriebswelle in eine hohe Drehzahl und ein niedriges Drehmoment der Abtriebswelle 6. Derart wird die Generatorwelle mit einer Drehzahl von etwa 450 min⁻¹ angetrieben. Durch die Drehbewegung des Rotors 9 gegenüber dem feststehenden Stator 10 wird in an sich bekannter Weise elektrischer Strom erzeugt.

Die im Betrieb des Generators 4 entstehende Wärme wird im Bereich des Stators 10 über den Statorkühlkreislauf 19 und im Bereich des Rotors 9 über den Rotorkühlkreislauf 18 abgeleitet. Durch die thermische Kopplung der beiden Kühlkreisläufe 18, 19 findet ein Wärmeaustausch zwischen beiden Kühlkreisläufen 18, 19 statt.

Um den Anstellwinkel der Windrotorblätter zu dem Wind aktiv ändern und so vor allem den Windrotor aerodynamisch bremsen zu können, können durch die als Hohlwellen ausgebildete Eingangs-, Ausgangs- 6 und Generatorwelle 7 eine nicht dargestellte Anlage zur Pitchsteuerung geführt werden. Weiterhin kann über die Bremsanlage 16 die Windrotordrehzahl bei Windböen innerhalb des gewünschten Drehzahltoleranzbereichs gehalten oder der Windrotor für Wartungsarbeiten festgestellt werden.

## Patentansprüche

1. Triebstrang (1) für eine Windenergieanlage mit einem Getriebe (2), das ein Getriebegehäuse (3) aufweist und über eine Antriebswelle mit einem Windrotor verbunden oder verbindbar ist, und einem Generator (2), der ein mit dem Getriebegehäuse (3) fest verbundenes Generatorgehäuse (5) aufweist, in dem wenigstens ein Stator (10) und wenigstens ein Rotor (9) vorgesehen sind, wobei der Rotor (9) mit einer an dem Getriebegehäuse (3) über Lager (13) gelagerten Abtriebswelle (6) des Getriebes (2) gekoppelt ist, die während des Betriebs schneller als die Antriebswelle läuft, **dadurch gekennzeichnet, dass** der Generator (4) eine koaxial zu der Abtriebswelle (6) des Getriebes (2) angeordnete und an dem Generatorgehäuse (5) über Lager (15) gelagerte Generatorwelle (7) aufweist, die über Verbindungsflansche (8a, 8b) mit der Abtriebswelle (6) des Getriebes (2) verbunden ist, wobei zwischen den Verbindungsflanschen (8) eine elektrische Isolierung vorgesehen ist, dass zwischen dem Getriebegehäuse (3) und dem Generatorgehäuse (5) eine Labyrinth- oder Spaltdichtung (14) vorgesehen ist, und dass der Reihe nach die Lager (13), die Labyrinth- oder Spaltdichtung (14) und der Verbindungsflansch (8a) an der Abtriebswelle (6) und sich daran anschließend der Verbindungsflansch (8b), der Rotor (9) und das Lager (15) an der Generatorwelle (7) gehalten sind.

2. Triebstrang (1) nach Anspruch 1, **dadurch gekennzeichnet, dass** der verbindungsflansch (8a) der Abtriebswelle (6) formschlüssig, insbesondere mittels Welle/Nabeverbindung, auf der Abtriebswelle (6) sitzt.

3. Triebstrang (1) nach Anspruch 1 oder 2, **dadurch gekennzeichnet, dass** die Antriebswelle und/oder die Abtriebswelle (6) und/oder die Generatorwelle (7) als Hohlwellen ausgebildet sind.

4. Triebstrang (1) nach einem der vorherigen Ansprüche, **dadurch gekennzeichnet, dass** der Stator (10) einen Statorkühlkreislauf (19) aufweist.

5. Triebstrang (1) nach Anspruch 4, **dadurch gekennzeichnet, dass** sich der Statorkühlkreislauf (19) entlang der Umfangsrichtung des Stators (10) erstreckt, und insbesondere an dessen Außenbereich ausgebildet ist.

6. Triebstrang (1) nach Anspruch 5, **dadurch gekennzeichnet, dass** der Statorkühlkreislauf (19) aus mehreren ringförmigen Kühlmittelkanälen (20) gebildet ist.

7. Triebstrang (1) nach einem vorherigen Ansprüche, **dadurch gekennzeichnet, dass** der Rotor (9) einen Rotorkühlkreislauf (18) aufweist.

8. Triebstrang (1) nach einem der Ansprüche 5 oder 6 und 7, **dadurch gekennzeichnet, dass** der Rotorkühlkreislauf (18) mit der von dem Stator (10) wegweisenden Außenfläche des Statorkühlkreislaufs (19) thermisch gekoppelt ist derart, dass ein Wärmeaustausch zwischen beiden Kühlkreisläufen stattfindet.

9. Triebstrang (1) nach Anspruch 7 oder 8, **dadurch gekennzeichnet, dass** ein Wellenlüfter vorgesehen ist, der auf der Generatorwelle (7) sitzt und ausgebildet ist, um den Rotorkühlkreislauf (18) anzutreiben.

10. Triebstrang (1) nach einem der vorherigen Ansprüche, **dadurch gekennzeichnet, dass** das Getriebe (2) einen Getriebekühlkreislauf aufweist.

11. Triebstrang (1) nach einem der Ansprüche 4 bis 9 und 10, **dadurch gekennzeichnet, dass** der Getriebekühlkreislauf mit dem Stator- oder Rotorkühlkreislauf (18, 19) flüssigkeitsleitend verbunden ist.

12. Triebstrang (1) nach einem der Ansprüche 4 bis 11, **dadurch gekennzeichnet, dass** als Kühlmedium des Stator- und/oder des Rotor- und/oder des Getriebekühlkreislaufes (18, 19) jeweils ein wasserhaltiges Kühlmittel vorgesehen ist.

13. Triebstrang (1) nach einem der vorherigen Ansprüche, **dadurch gekennzeichnet, dass** zumindest ein Teil des Getriebegehäuses (3) mit einem Schmiermedium, insbesondere einem ölhaltigen Schmiermedium gefüllt ist.

14. Triebstrang (1) nach einem der vorhergehenden Ansprüche, **dadurch gekennzeichnet, dass** die elektrische Isolierung zwischen den beiden Verbindungsflanschen (8a, 8b) öl- und fettabweisend ausgebildet ist.

15. Triebstrang (1) nach einem der vorherigen Ansprüche, **dadurch gekennzeichnet, dass** an der von dem Getriebe (2) wegweisenden Seitenwand des Generatorgehäuses (5) eine Bremsanlage (16) für die Generatorwelle (7) vorgesehen ist, und dass insbesondere die Generatorwelle (7) eine mit der Bremsanlage (16) zusammenwirkende Bremsscheibe (17) trägt.

16. Triebstrang (1) nach einem der vorherigen Ansprüche, **dadurch gekennzeichnet, dass** der Generator (4) als permanenterregter Generator ausgebildet ist.

17. Triebstrang (1) nach einem der vorherigen Ansprüche, **dadurch gekennzeichnet, dass** der Generator (4) als Innenläufer ausgebildet ist.

18. Triebstrang (1) nach einem der vorherigen Ansprüche, **dadurch gekennzeichnet, dass** der Generator (4) mit einer Drehzahl von etwa 450 min⁻¹ bis 650 min⁻¹ rotiert.

## Claims

1. Drive train (1) for a wind turbine with a transmission (2), which has a transmission casing (3) and is or can be connected to a wind rotor via a drive shaft, and a generator (4), which has a generator casing (5) which is securely connected to the transmission casing (3), in which at least one stator (10) and at least one rotor (9) are provided, wherein the rotor (9) is coupled to an output shaft (6) of the transmission (2), which shaft is mounted on the transmission casing (3) via bearings (13) and runs faster than the drive shaft during operation, **characterized in that** the generator (4) has a generator shaft (7) which is arranged coaxially with the output shaft (6) of the transmission (2), is mounted on the generator casing (5) via bearings (15) and is connected to the output shaft (6) of the transmission (2) via connection flanges (8a, 8b), wherein electrical insulation is provided between the connection flanges (8); **in that** a labyrinth seal or gap seal (14) is provided between the transmission casing (3) and the generator casing (5); and **in that**, in order, the bearings (13), the labyrinth seal or gap seal (14) and the connection flange (8a) are held on the output shaft (6) and, adjoining this, the connection flange (8b), the rotor (9) and the bearing (15) are held on the generator shaft (7).

2. Drive train (1) according to Claim 1, **characterized in that** the connection flange (8a) of the output shaft (6) is seated on the output shaft (6) in a form-fitting manner, in particular by means of a shaft-hub connection.

3. Drive train (1) according to Claim 1 or 2, **characterized in that** the drive shaft and/or the output shaft (6) and/or the generator shaft (7) are formed as hollow shafts.

4. Drive train (1) according to one of the preceding claims, **characterized in that** the stator (10) has a stator cooling circuit (19).

5. Drive train (1) according to Claim 4, **characterized in that** the stator cooling circuit (19) extends along the circumferential direction of the stator (10) and in particular is formed on the outer region thereof.

6. Drive train (1) according to Claim 5, **characterized in that** the stator cooling circuit (19) is formed from multiple annular coolant ducts (20).

7. Drive train (1) according to one of the preceding claims, **characterized in that** the rotor (9) has a rotor cooling circuit (18).

8. Drive train (1) according to one of Claims 5 or 6 and 7, **characterized in that** the rotor cooling circuit (18) is thermally coupled to that outer surface of the stator cooling circuit (19) which is oriented away from the stator (10), such that a heat exchange takes place between the two cooling circuits.

9. Drive train (1) according to Claim 7 or 8, **characterized in that** a shaft fan is provided which is seated on the generator shaft (7) and is designed to drive the rotor cooling circuit (18).

10. Drive train (1) according to one of the preceding claims, **characterized in that** the transmission (2) has a transmission cooling circuit.

11. Drive train (1) according to one of Claims 4 to 9 and 10, **characterized in that** the transmission cooling circuit is fluidically connected to the stator cooling circuit (19) or rotor cooling circuit (18).

12. Drive train (1) according to one of Claims 4 to 11, **characterized in that**, as cooling medium for the stator cooling circuit (19) and/or for the rotor cooling circuit (18) and/or for the transmission cooling circuit, in each case a water-containing coolant is provided.

13. Drive train (1) according to one of the preceding claims, **characterized in that** at least part of the transmission casing (3) is filled with a lubricating medium, in particular an oil-containing lubricating medium.

14. Drive train (1) according to one of the preceding claims, **characterized in that** the electrical insulation between the two connection flanges (8a, 8b) is designed to be oil- and fat-repelling.

15. Drive train (1) according to one of the preceding claims, **characterized in that** a braking apparatus (16) for the generator shaft (7) is provided on that sidewall of the generator casing (5) which is oriented away from the transmission (2), and **in that** in particular the generator shaft (7) bears a brake disc (17) which interacts with the braking apparatus (16).

16. Drive train (1) according to one of the preceding claims, **characterized in that** the generator (4) is designed as a permanently excited generator.

17. Drive train (1) according to one of the preceding claims, **characterized in that** the generator (4) is designed as an internal rotor.

18. Drive train (1) according to one of the preceding claims, **characterized in that** the generator (4) rotates at a speed of approximately 450 rpm to 650 rpm.

## Revendications

1. Chaîne ( 1 ) motrice pour une éolienne ayant une transmission ( 2 ), qui a un carter ( 3 ) de transmission et qui est reliée à un rotor éolien par un arbre moteur ou qui peut l'être, et une génératrice ( 2 ), qui a un carter ( 5 ) de génératrice qui est relié fixement au carter ( 3 ) de la transmission et dans lequel sont prévus au moins un stator ( 10 ) et au moins un rotor ( 9 ), le rotor ( 9 ) étant couplé à un arbre ( 6 ) mené de la transmission ( 2 ) supporté par des paliers ( 13 ) sur le boîtier ( 3 ) de la transmission, arbre mené ( 6 ) qui pendant le fonctionnement tourne plus vite que l'arbre menant, **caractérisée en ce que** la génératrice ( 4 ) a un arbre ( 7 ) de génératrice, qui est disposé coaxialement à l'arbre ( 6 ) mené de la transmission ( 2 ), qui est supporté par des paliers ( 15 ) sur le carter ( 5 ) de la génératrice et qui est relié à l'arbre ( 6 ) mené de la transmission ( 2 ) par des brides ( 8a, 8b ) de liaison, une isolation électrique étant prévue entre les brides ( 8 ) de liaison, **en ce qu'**il est prévu entre le carter ( 3 ) de la transmission et le carter ( 5 ) de la génératrice un joint ( 14 ) à labyrinthe ou à fente labyrinthique et **en ce que** dans l'ordre les paliers ( 13 ), le joint ( 14 ) à labyrinthe ou à fente labyrinthique et la bride ( 8a ) de liaison de l'arbre ( 6 ) mené et, s'y raccordant, la bride ( 8b )de liaison, le rotor ( 9 ) et le palier ( 15 ) sont maintenus sur l'arbre ( 7 ) de la génératrice.

2. Chaîne ( 1 ) motrice suivant la revendication 1, **caractérisée en ce que** la bride ( 8a ) de liaison de l'arbre ( 6 ) mené est montée à complémentarité de forme, notamment au moyen d'une liaison arbre/moyeu, sur l'arbre ( 6 ) mené.

3. Chaîne ( 1 ) motrice suivant la revendication 1 ou 2, **caractérisée en ce que** l'arbre menant et/ou l'arbre ( 6 ) mené et/ou l'arbre ( 7 ) de la génératrice sont constitués sous la forme d'arbre creux.

4. Chaîne ( 1 ) motrice suivant l'une des revendications précédentes, **caractérisée en ce que** le stator ( 10 ) à un circuit ( 19 ) de refroidissement du stator.

5. Chaîne ( 1 ) suivant la revendication 4, **caractérisée en ce que** le circuit ( 19 ) de refroidissement du stator s'étend dans la direction périphérique de stator ( 10 ) et notamment sur sa partie extérieure.

6. Chaîne ( 1 ) suivant la revendication 5, **caractérisée en ce que** le circuit ( 19 ) de refroidissement du stator est formé de plusieurs canaux ( 20 ) annulaires pour du fluide de refroidissement.

7. Chaîne ( 1 ) motrice suivant l'une des revendications précédentes, **caractérisée en ce que** le rotor ( 9 ) a un circuit ( 18 ) de refroidissement du rotor.

8. Chaîne ( 1 ) motrice suivant l'une des revendications 5 ou 6 et 7, **caractérisée en ce que** le circuit ( 18 ) de refroidissement du rotor est couplé thermiquement à la surface extérieure, éloignée du stator ( 10 ), du circuit ( 19 ) de refroidissement du stator de manière à avoir un échange de chaleur entre les deux circuits de refroidissement.

9. Chaîne ( 1 ) motrice suivant la revendication 7 ou 8, **caractérisée en ce qu'**il est prévu un ventilateur d'arbre, qui est monté sur l'arbre ( 7 ) de la génératrice et qui est constitué pour faire fonctionner le circuit ( 18 ) de refroidissement du rotor.

10. Chaîne ( 1 ) motrice suivant l'une des revendications précédentes, **caractérisée en ce que** la transmission ( 2 ) a un circuit de refroidissement de la transmission.

11. Chaine ( 1 ) motrice suivant l'une des revendications 4 à 9 et 10, **caractérisée en ce que** le circuit de refroidissement de la transmission communique d'une manière conductrice d'un liquide avec le circuit ( 18, 19 ) de refroidissement du stator ou de refroidissement du rotor.

12. Chaîne ( 1 ) motrice suivant l'une des revendications 4 à 11, **caractérisée en ce qu'**il est prévu comme fluide de refroidissement du circuit ( 18, 19 ) de refroidissement du stator et/ou de refroidissement du rotor et/ou du refroidissement de la transmission respectivement un fluide de refroidissement contenant de l'eau.

13. Chaîne ( 1 ) motrice suivant l'une des revendications précédentes, **caractérisée en ce qu'**au moins une partie du carter ( 3 ) de la transmission est emplie d'un milieu de lubrification, notamment d'un milieu de lubrification huileux.

14. Chaîne ( 1 ) motrice suivant l'une des revendications précédentes, **caractérisée en ce que** l'isolation électrique est constituée entre les deux brides ( 8a, 8b ) de liaison de manière à repousser l'huile et la graisse.

15. Chaîne ( 1 ) motrice suivant l'une des revendications précédentes, **caractérisée en ce qu'**il est prévu sur la paroi latérale, éloignée de la transmission ( 2 ), du carter ( 5 ) de la génératrice une installation ( 16 ) de freinage de l'arbre ( 7 ) de la génératrice et **en ce que** notamment l'arbre ( 7 ) de la génératrice porte un disque ( 17 ) de frein coopérant avec l'installation ( 16 ) de freinage.

16. Chaîne ( 1 ) motrice suivant l'une des revendications précédentes, **caractérisée en ce que** la génératrice ( 4 ) est constituée sous la forme d'une génératrice à excitation permanente.

17. Chaîne ( 1 ) motrice suivant l'une des revendications précédentes, **caractérisée en ce que** la génératrice ( 4 ) est constituée sous la forme d'un induit intérieur.

18. Chaîne ( 1 ) motrice suivant l'une des revendications précédentes, **caractérisée en ce que** la génératrice ( 4 ) tourne à une vitesse de rotation d'environ 450 min⁻¹ à 650 min¹.
